# EUROPÄISCHE PATENTSCHRIFT

(11) **EP 0 305 824 B1**
(45) Veröffentlichungstag und Bekanntmachung des Hinweises auf die Patenterteilung: **16.03.1994**
(21) Anmeldenummer: 88113486.0
(22) Anmeldetag: 19.08.1988
(51) Int. Cl.: H04J 3/06

(54) **Serielle Schnittstelle**
Serial interface
Interface sérielle

(30) Priorität: 28.08.1987 DE 3728782
(43) Veröffentlichungstag der Anmeldung: 08.03.1989
(73) Patentinhaber: Deutsche Thomson-Brandt GmbH, 78010 Villingen-Schwenningen (DE)
(72) Erfinder: Rottmann, Dieter, Dipl.-Ing., D-3000 Hannover 61 (DE); Laabs, Jürgen, Dipl-Ing., D-3017 Pattensen (DE)

(56) Entgegenhaltungen:
- EP-A- 0 118 123
- ELECTRONICS AND COMMUNICATIONS IN JAPAN, Band 49, Nr. 5, Mai 1966, Seiten 27-34; H. INOSE et al.: "Data concentration and distribution system with capabilities of message storage and speed conversion"
- DAVIES & BARBER: "Communication Networks for Computers", 1973, Seiten 177+192-198, Wiley, London, GB

## Beschreibung

Die Erfindung betrifft eine serielle Schnittstelle nach dem Oberbegriff des Anspruchs 1. Eine solche Schnittstelle ist bekannt aus Electronics and Communications in Japan", Band 49, Nr. 5, Mai 1966, Seiten 27 - 34; H. Inose et al: "Data concentration and distribution system with capabilities of message storage and speed conversion".

Bei der seriellen Übertragung digitaler Signale, die in eine vorgegebene Rahmenstruktur eingeordnet sind, ist es bekannt, für die Datenverarbeitung einen Datenprozessor einzusetzen, der programmgesteuert Berechnungen durchführt. Diese Berechnungen werden während der Aufnahme neuer Daten oder Ausgabe berechneter Daten unterbrochen. Treffen die zu übernehmenden Daten zeitlich gestaffelt als zu Datenworten zusammenfassende Bits ein, so können sich die erforderlichen Unterbrechungen zur Übernahme der Daten zu einer solchen Gesamtzeit aufsummieren, daß bei umfangreichen Berechnungen nicht mehr genügend Zeit für ihre Durchführung verbleibt.

Der Erfindung liegt deshalb die Aufgabe zugrunde, eine serielle Schnittstelle nach dem Oberbegriff des Anspruchs 1 so auszubilden, daß die für die Aufnahme der Daten benötigte Zeit wesentlich vermindert wird und damit eine längere, zusammenhängende Zeit für Berechnungen des Prozessors gewonnen wird.

Diese Aufgabe wird bei der seriellen Schnittstelle nach dem Oberbegriff des Anspruchs 1 durch die im kennzeichnenden Teil ausgegebenen Merkmale gelöst.

In dem Schieberegister werden die Daten, die einen von dem Prozessor zusammenhängend zu bearbeitenden Datensatz ergeben, zeitlich nacheinander gespeichert. Die Übernahme der Daten in den Prozessor erfolgt erst, wenn alle zusammengehörenden Daten vorhanden sind, und zwar in einem zeitlich zusammenhängenden Interval. Wird die Übernahme der Daten zeitlich so gerafft, daß sie in das Interval zwischen zwei aufeinanderfolgenden Daten geschachtelt werden kann, so wird der Datenstrom durch diesen Vorgang nicht gestört.

Das Zeitraffen geschieht dadurch, daß das Schieberegister zwischen den Zeitpunkten des Eintreffens zweier aufeinanderfolgender Daten mit einer höheren Taktfrequenz getaktet wird, als beim normalen Datentransport. Dabei wird gleichzeitig der Datenausgang des Schieberegisters auf seinen Eingang geschaltet. Über die so gebildete Schleife durchlaufen die Daten eines gesamten Datenwortes einmal das Schieberegister und belegen anschließend wieder dieselben Speicherzellen wie vorher. Der Datenübergang selbst findet in dieser Phase über den Ausgang der dem Dateneingang des Schieberegisters nächstliegenden Speicherzelle statt.

Weiterbildungen und vorteilhafte Ausführungsformen ergeben sich aus den weiteren Ansprüchen, der Beschreibung und der Zeichnung, in der ein Ausführungsbeispiel veranschaulicht ist. In der Zeichnung zeigen:
- Fig.1:: Ein die Erfindung verkörperndes Schaltbild, als Bestandteil eines Empfängers für digitalen Satelliten-Rundfunk;

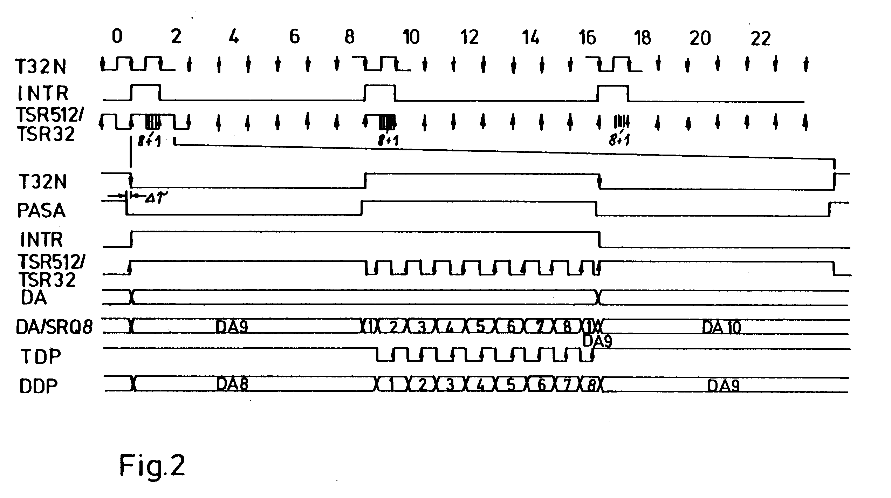

- Fig.2:: Ein Impulsdiagramm zur Erläuterung der in Fig. 1 dargestellten Schaltung;

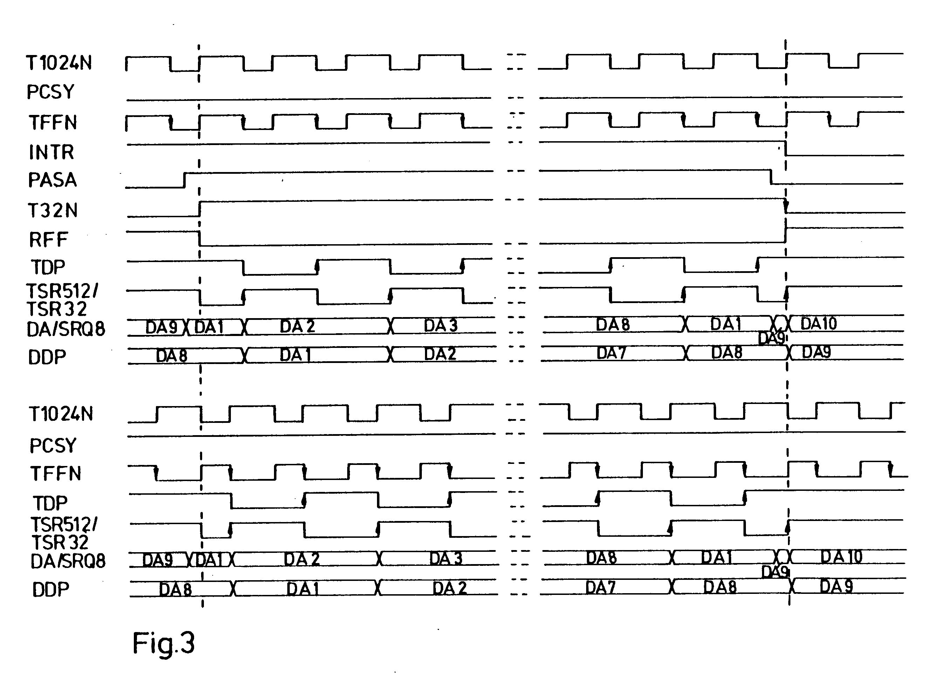

- Fig.3:: Einen gedehnten Zeitausschnitt des Impulsdiagramms aus Fig. 1.

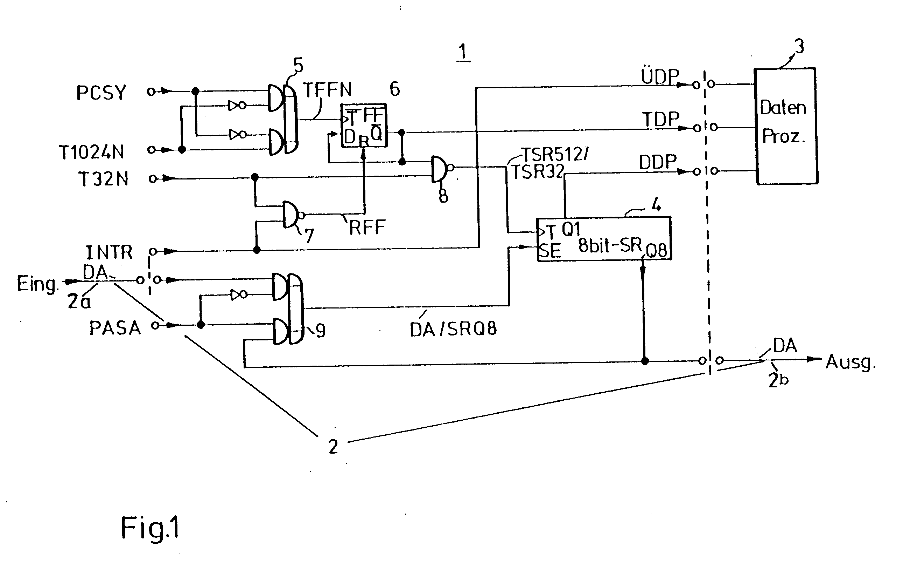

Die in Fig. 1 dargestellte, als Ganzes mit 1 bezeichnete Schnittstelle liegt zwischen einer Datenleitung 2 und einem Datenprozessor 3. Auf der Datenleitung 2 werden mit einer Frequenz von 32 kHz Daten -im folgenden DA genannt- übertragen. Es handelt sich hierbei um die Sonderdienst-Bit im Hauptrahmen A nach den Spezifikationen des Hörfunkübertragungsverfahrens in TV-SAT, wie sie unter anderem in der DE-OS 33 08 025 beschrieben sind.

Eine nicht näher dargestellte Auswerteschaltung selektiert aus dem Datenstrom die DA, speichert sie zwischen und gibt sie beim Eintreffen des nächsten DA auf die Datenleitung 2. Ein erster Takt mit einer Frequenz von 32 kHz -im folgenden T32N genannt- übernimmt mit seiner negativen Flanke die auf der Datenleitung 2 anstehenden DA durch einen Dateneingang SE in ein Schieberegister 4. Mit weiteren Takten T32N werden die eingeschrieben Daten von Speicherzelle zu Speicherzelle weitergeschoben und nach der achten Speicherzelle über einen Datenausgang Q8 ausgelesen. In dem Datenstrom bilden jeweils acht zusammengehörende DA Datenworte, welche der Datenprozessor 3 weiterverarbeiten soll. Die zusammengehörenden DA werden jeweils durch ein Unterbrechungssignal INTR gekennzeichnet, das nach dem achten DA abgegeben wird.

Um die acht DA in den Datenprozessor 3 übernehmen zu können, wird im zweiten Teil derjenigen Taktperiode von T32N, die mit INTR zeitgleich ist, ein zweiter Takt mit einer 16-fach höheren Frequenz an den Takteingang T des Schieberegisters 4 und an einen Takteingang des Datenprozessors 3 angelegt. Der zweite Takt wird aus einem durch die Auswerteschaltung bereitgestellten Takt T1024N mit einer Frequenz von 1024 kHz durch Herunterteilen auf 512 kHz gewonnen. Die Taktflanken von T1024N besitzen jedoch nicht für alle in der eingangs genannten Rahmenstruktur enthaltenen Datenfolgen die auf T32N bezogene richtige Taktflanke, da bei seiner Erzeugung kein gemeinsamer Teiler zwischen einer Datenblockverschiebung von 77 Bit und einer Frequenzteilung von fünf zu eins vorhanden ist. Um T1024N allgemein als Taktquelle für den zweiten Takt verwenden zu können, wird zusätzlich ein Programmcode-Synchronsignal PCSY berücksichtigt und durch ein Verknüpfungsglied 5 mit T1024N zu TFFN verknüpft. Letzteres wird dann einem als Teiler dienenden Flip-Flop 6 zugeführt.

Durch das Unterbrechungssignal INTR, welches durch ein Verknüpfungsglied 7 mit T32N verknüpft wird, wird ein Rücksetzbefehl RFF für das Flip-Flop 6 aufgehoben und der Datenprozessor 3 für die Übernahme von Daten durch ein aus dem INTR abgeleitetes Übernahmesignal ÜDP freigegeben. Am Ausgang Q̅ des Flip-Flop 6 erscheint nun der Takt T512N, der an den Takteingang des Datenprozessors 3 als TDP und über ein Verknüpfungsglied 8 an den Takteingang des Schieberegisters 4 als TSR512 gelangt.

Dem Dateneingang SE des Schieberegisters 4 können über ein Verknüpfungsglied 9 alternativ Daten auf der ankommenden Datenleitung 2a oder dem Datenausgang Q8 bzw. der abgehenden Datenleitung 2b zugeführt werden. Die Zuordnung besorgt ein als Hilfssignal dienendes Signal "Programmart Serielle Auskopplung" -PASA genannt-. Dieses PASA besitzt die gleiche Frequenz wie T32N, eilt jedoch zeitlich um etwa ca. 200 nsec vor, was beim Einschreiben von DA in das Schieberegister 4 nach einer vorangegangenen Übertragung von DA zum Datenprozessor vorteilhaft ist.

Während der zweiten Hälfte der Periode von PASA, in der dieses Signal logisch H ist und das Schieberegister 4 mit TSR512 getaktet ist, gelangen die zu übernehmenden Daten über den Ausgang Q1 des Schieberegisters (4) als DDP an den Dateneingang des Datenprozessors und durchlaufen außerdem einmal das gesamte Schieberegister 4. Danach stehen die Daten wieder in denselben Speicherzellen, in denen sie vor Beginn des beschriebenen Vorganges standen. Anschließend wird der Datenprozessor 3 durch Änderung des logischen Zustandes von INTR wieder in den Zustand versetzt, der die Datenverarbeitung nach dem vorgesehenen Programm ermöglicht und das Flip-Flop 6 gesperrt.

Rechtzeitig vor dem Einschreiben neuer Daten DA in das Schieberegister ändert das Signal PASA seinen logischen Zustand, so daß durch die kurz darauf eintreffende negative Flanke von T32N wieder das erste DA des nächsten Datenwortes übernommen werden kann. Durch den zeitlichen Versatz von PASA und T32N ist es so möglich die Übertragung der Daten zum Datenprozessor 3 in den zweiten Teil der Taktperiode von T32N hineinzulegen ohne den Takt unterbrechen zu müssen.

Währendder folgenden sieben Taktperioden von T32N ist der Datenprozessor 3 in der Lage, die übernommenen Daten in einem zusammenhängenden Programmablauf zu bearbeiten, bis ein neuer Datensatz von acht DA in das Schieberegister 4 eingeschrieben wurde und der beschriebene Vorgang der Datenübernahme in den Datenprozessor wiederholt wird.

## Patentansprüche

1. Serielle Datenschnittstelle zwischen einer einen kontinuierlichen digitalen Datenstrom übertragenen Datenleitung (2) und einem digitalen Datenprozessor (3), wobei die Schnittstelle ein in der Datenleitung seriell angeordnetes Schieberegister aufweist, **dadurch gekennzeichnet**, daß die Datenleitung (2) eine ankommende (2a) und eine abgehende Datenleitung (2b) umfaßt, daß ein Ausgang (Q1) der dem Dateneingang (SE) des Schieberegisters (4) nächstliegenden Speicherzelle mit einem Eingang des digitalen Datenprozessors (3) verbunden ist und daß mittels einer Steuerschaltung in einer ersten Betriebsart bei einer ersten Taktfrequenz (T32N) die Datenleitung (2) und in einer zweiten Betriebsart bei einer zweiten, höheren Taktfrequenz (T512N) der Datenausgang des Schieberegisters (Q8) mit dem Dateneingang (SE) des Schieberegisters (4) verbunden ist und der Datenprozessor (3) auf Datenübernahme geschaltet ist.

2. Schnittstelle nach Anspruch 1, **dadurch gekennzeichnet**, daß die ankommende Datenleitung (2a), der Datenausgang (Q8) und eine Steuerleitung über ein logisches Verknüpfungsglied (9) mit dem Dateneingang (SE) des Schieberegisters (4) verbunden sind.

3. Schnittstelle nach Anspruch 1 oder 2, **dadurch gekennzeichnet**, daß die Steuerschaltung eine Auswerteschaltung für einen aus dem seriellen Datenstrom (DA) gewonnen ersten Takt (T32N) und für einen aus einem Datenstrom gewonnenen zweiten höherfrequenten Takt (T512N) oder einen Frequenzvervielfacher umfaßt.

4. Schnittstelle nach einem der Ansprüche 1 oder 2, **dadurch gekennzeichnet**, daß durch die Auswerteschaltung ein dem ersten Takt (T32N) frequenzgleiches, jedoch zeitlich voreilendes Hilfssignal (PASA) gewonnen wird.

5. Schnittstelle nach Anspruch 3 oder 4, **dadurch gekennzeichnet**, daß der serielle Datenstrom (DA) durch die Sonderdienst-Bit im Hauptrahmen gemäß der Rahmenstruktur des Digitalen Satelliten Rundfunks im TV-SAT gebildet ist.

6. Schnittstelle nach einem der Ansprüche 3 bis 5, **dadurch gekennzeichnet**, daß der höherfrequente Takt (T512N) durch einen die Abtastwerte im Hauptrahmen begleitenden Takt gemäß der Rahmenstruktur des Digitalen Satelliten Rundfunks im TV-SAT gebildet ist oder gewonnen wird.

7. Schnittstelle nach einem der Ansprüche 3 bis 6, **dadurch gekennzeichnet**, daß eine den Takt (T32N) der ersten Taktfrequenz und eine den Takt (T512N) der zweiten Taktfrequenz führende Taktleitung über ein Verknüpfungsglied (8) mit einem Takteingang (T) des Schieberegisters (4) verbunden sind.

8. Schnittstelle nach einem der Ansprüche 3 bis 7, **dadurch gekennzeichnet**, daß die zweite Taktfrequenz T512N) wenigstens um den Faktor höher als die erste (T32N) ist, der der doppelten Anzahl der ein Datenwort bildenden Einzeldaten, z.B. einzelner Bit entspricht.

9. Schnittstelle nach Anspruch 8, **dadurch gekennzeichnet**, daß ein durch den ersten Takt (T32N) gesteuertes Gatter (7) vorgesehen ist, durch welches der zweite Takt (T512N) nur während des zweiten Teils der Taktperiode des ersten Taktes (T32N) anliegt.

10. Schnittstelle nach einem der Ansprüche 3 bis 8, **dadurch gekennzeichnet**, daß der Anfangs- und/oder Endzyklus der zweiten Betriebsart zur Datenübernahme in das Schieberegister (4) und in den Datenprozessor (3) verkürzt ist.

## Claims

1. A serial data interface between a data line (2) transmitting a continuous digital data stream and a digital data processor (3), the interface having a shift register which is arranged serially in the data line, characterised in that the data line (2) comprises an incoming data line (2a) and an outgoing data line (2b), in that an output (Q1) of the storage cell lying nearest to the data input (SE) of the shift register (4) is connected to the input of the digital data processor (3) and in that by means of a control circuit in a first mode of operation at a first clock frequency (T32N) the data line (2), and in a second mode of operation at a second higher clock frequency (T512N) the data output (Q8) of the shift register, is connected to the data input (SE) of the shift register (4) and the data processor (3) is switched to data acceptance.

2. An interface according to claim 1, characterised in that the incoming data line (2a), the data output (Q8) and a control line are connected by way of a logic element (9) to the data input (SE) of the shift register.

3. An interface according to claim 1 or 2, characterised in that the control circuit comprises an evaluation circuit for a first clock signal (T32N) obtained from the serial data stream and for a higher-frequency clock signal (T512N) obtained from a data stream or a frequency multiplier.

4. An interface according to any one of claims 1 or 2, characterised in that an auxiliary signal (PASA) which is of identical frequency to the first clock signal (T32N) but which leads temporally is obtained through the evaluation circuit.

5. An interface according to claims 3 or 4, characterised in that the serial data stream (DSA) is formed by the special service bit in the main frame in accordance with the frame structure of the Digital Satellite Broadcast in the TV-SAT.

6. An interface according to any one of claims 3 to 5, characterised in that the higher-frequency clock signal (T512N) is formed or obtained by a clock signal, accompanying the sample values in the main frame, in accordance with the frame structure of the Digital Satellite Broadcast in the TV-SAT.

7. An interface according to any one of claims 3 to 6, characterised in that a clock line conducting the clock signal (T32N) of the first clock frequency and a clock line conducting the clock signal (T512N) of the second clock frequency are connected by way of a logic element (8) to a clock input (T) of the shift register (4).

8. An interface according to any one of claims 3 to 7, characterised in that the second clock frequency (T512N) is higher than the first one (T32N) at least by the factor which corresponds to twice the number of the individual data, e.g. individual bits, forming a data word.

9. An interface according to claim 8, characterised in that a gate (7) controlled by the first clock signal (T32N) is provided, through which the second clock signal (T512N) is applied only during the second part of the clock period of the first clock signal (T32N).

10. An interface according to any one of claims 3 to 8, characterised in that the initial and/or end cycle of the second mode of operation is shortened for the acceptance of data into the shift register (4) and into the data processor (3).

## Revendications

1. Interface série entre une ligne de données (2) qui transmet un flux continu de données numériques et un processeur numérique de données (3), l'interface présentant un registre à décalage placé de manière sérielle dans la ligne de données, **caractérisé en ce** que la ligne de données (2) comprend une ligne de données qui arrivent (2a) et une ligne de données qui sortent (2b), qu'une sortie (Q1) de l'emplacement de mémoire le plus proche de l'entrée de données (SE) du registre à décalage (4) est reliée à une entrée du processeur numérique de données (3) et que la ligne de données (2) est reliée au moyen d'un circuit de commande dans un premier mode de fonctionnement à une première fréquence de cycle (T32N) à l'entrée de données (ES) du registre à décalage (4) et dans un second mode à une seconde fréquence de cycle plus élevée (T512N) la sortie de données du registre à décalage (Q8) et le processeur de données (3) est commuté sur transfert de données.

2. Interface selon la revendication 1, **caractérisé en ce** que la ligne des données qui arrivent (2a), la sortie des données (Q8) et une ligne de commande sont reliées par un élément d'enchaînement logique (9) à l'entrée des données (SE) du registre à décalage (4).

3. Interface selon la revendication 1 ou 2, **caractérisé en ce** que le circuit de commande comprend un circuit d'évaluation pour un premier cycle (T32N) obtenu à partir du flux de données série (DA) et pour un second cycle (T512N) à fréquence plus élevée, obtenu à partir d'un flux de données, ou un multiplicateur de fréquence.

4. Interface selon l'une des revendications 1 ou 2, **caractérisé en ce** qu'un signal auxiliaire (PASA) de même fréquence que le premier cycle (T32N) mais en avance dans le temps est obtenu par le circuit d'évaluation.

5. Interface selon la revendication 3 ou 4, **caractérisé en ce** que le flux de données série (DA) est formé par les bits de services spéciaux dans le cadre principal selon la structure de cadre de la radiodiffusion numérique par satellite dans le TV-SAT.

6. Interface selon l'une des revendications 3 à 5, **caractérisé en ce** que le cycle de fréquence plus élevée (T512N) est formé ou obtenu par un cycle qui accompagne les valeurs de balayage dans le cadre principal selon la structure de cadre de la radiodiffusion numérique par satellite dans le TV-SAT.

7. Interface selon l'une des revendications 3 à 6, **caractérisé en ce** qu'une ligne d'horloge qui guide le cycle (T32N) de la première fréquence de cycle et une ligne d'horloge qui guide le cycle (T512N) de la seconde fréquence de cycle sont reliées par un élément d'enchaînement (8) à l'entrée d'horloge (T) du registre à décalage (4).

8. Interface selon l'une des revendication 3 à 7, **caractérisé en ce** que la seconde fréquence de cycle (T512N) est au moins plus élevée que la première (T32N) du facteur qui correspond au double du nombre des données individuelles, par exemple des bits individuels, qui forment un mot de données.

9. Interface selon la revendication 8, **caractérisé en ce** qu'il est prévu une porte (7), commandée par le premier cycle (T32N), par laquelle le second cycle (T512N) n'est présent que pendant la seconde partie de la période de cycle du premier cycle (T32N).

10. Interface selon l'une des revendications 3 à 8, **caractérisé en ce** que le cycle de début et/ou de fin du second mode est abrégé pour le transfert des données dans le registre à décalage (4) et dans le processeur de données (3).
